# NEUE EUROPÄISCHE PATENTSCHRIFT

(11) **EP 1 056 328 B2**
(45) Veröffentlichungstag und Bekanntmachung des Hinweises auf die Entscheidung über den Einspruch: **03.10.2007**
(45) Hinweis auf die Patenterteilung: 17.12.2003
(21) Anmeldenummer: 99908895.8
(22) Anmeldetag: 13.02.1999
(51) Int. Cl.: A01D 41/12, A01F 12/44

(54) **MÄHDRESCHER MIT VORRICHTUNG ZUR AUTOMATISCHEN REINIGUNGSEINSTELLUNG**
COMBINE WITH A DEVICE FOR AUTOMATIC CLEANING REGULATION
MOISSONNEUSE-BATTEUSE COMPORTANT UN DISPOSITIF DE REGLAGE AUTOMATIQUE DU NETTOYAGE

(30) Priorität: 20.02.1998 DE 19807145
(43) Veröffentlichungstag der Anmeldung: 06.12.2000
(73) Patentinhaber: CLAAS Selbstfahrende Erntemaschinen GmbH, 33428 Harsewinkel (DE)
(72) Erfinder: DIEKHANS, Norbert, D-33335 Gütersloh (DE)
(86) Internationale Anmeldenummer: PCT/EP1999/000963
(87) Internationale Veröffentlichungsnummer: WO 1999/041967

(56) Entgegenhaltungen:
- EP-A- 0 586 999
- EP-A- 0 728 409
- DE-A- 2 753 505
- DE-A- 3 810 723
- DE-A- 4 311 054
- DE-C- 4 425 453
- GB-A- 2 014 025
- GB-A- 2 098 446
- JP-A- 1 281 008
- US-A- 4 466 231
- US-A- 4 527 241
- H.Kutzbach, Mähdrescher, in Jahrbuch Agrartechnik 1995, veröffentlicht von VDI - Gesellschaft Agrartechnik u.a., Seite 150
- " Fundamentals of Machine Operation ", Combine Harvesting, John Deere Service Publications, Moline,1973, Seite 145

## Beschreibung

Die Erfindung bezieht sich auf eine Vorrichtung an einem Mähdrescher mit einer Reinigungseinrichtung, die eine Siebvorrichtung mit mindestens einem Sieb, durch welche das in den Dresch- und Trenneinrichtungen abgeschiedene Erntegut gereinigt wird, und mindestens ein einstellbares Gebläse zur Beaufschlagung der Siebvorrichtung mit Wind umfaßt, wobei die Örfnungsweiten der Siebvorrichtung über mindestens ein Stellorgan und/ oder das Gebläse maschinell einstellbar sind, wobei der Mähdrescher mindestens einen sensor enthält, dessen Messsignal direkt oder indirekt ein Maß für die Belastung des Mähdreschers mit Erntegut ist, vql. DE-A-2 753 505.

Das ausgedroschene Erntegut, das von den Dresch- und Trenneinrichtungen abgeschieden wird, ist mit Spreu und Kurzstroh vermischt. Die Reinigungseinrichtung dient dazu, das Erntegut von diesen Beimengungen zu trennen. Der durch die Sieböffnungen (Löcher, Maschen, Schlitze) austretende Geblasewind lockert das über die Siebvorrichtung geführte Erntegut-Spreu-Kurzstrohgemisch auf und sorgt für das Heraustrennen der spezifisch leichteren Spreu-und Kurzstrohteile, wahrend die schwereren Erntegutkörner durch die Sieböffnungen auf die Auffang- und Führungsböden fallen und einer Kornförderschnecke zugeführt werden, von der das gereinigte Erntegut dann über einen Elevator in den Korntank gefördert wird. Die optimale Einstellung der Reinigungseinrichtung (Gebläsedrehzahl, Sieböffnungsweite) ist dann erreicht, wenn das Erntegut gereinigt d.h. von Spreu und Kurzstroh getrennt und verlustfrei geerntet werden kann.

Die Einstellung der Reinigungseinrichtung wird vor Beginn einer Emtefahrt fruchtartabhängig auf bestimmte Standard- oder Erfahrungswerte eingestellt. Dafür lassen sich in der Regel die Gebläsedrehzahl und die Öffnungsweiten der Siebvorrichtung vom Fahrerstand aus manuell einstellen.

Um nun eine optimale Reinigungseinstellung zu finden muß dafür gesorgt werden, daß das Erntegut-Spreu-Kurzstrohgemisch oberhalb der Siebe mit der richtigen Windmenge, -geschwindigkeit und -richtung beaufschlagt wird. Die Zusammensetzung dieses Gemisches hängt von vielen erntegutspezifischen Parametern wie beispielsweise Erntegutfeuchte. Strohfeuchte.

Emtegutart sowie von der Einstellung der Dresch- und Trennvorrichtung ab.

Einen weiteren großen Einfluß auf die Reinigungsqualität hat die von der Reinigungseinrichtung zu reinigende Erntegut-Spreu-Kurzstrohgemischmenge. Diese hängt wiederum von dem momentanen Erntegutdurchsatz ab. Um Änderungen der Reinigungsbelastung kompensieren zu können, wird in der DE 44 25 453 C1 vorgeschlagen, die Gebläsedrehzahl in Abhängigkeit einer oberhalb der Siebvorrichtung gemessenen Windgeschwindigkeit oder einen dort gemessenen Druck zu regeln.
Nachteilig wirkt sich bei dieser Art von automatischer Einstellung der Reinigungseinrichtung aus, daß der Winddruck oder die Windgeschwindigkeit nicht unmittelbar ein Maß für die Reinigungsqualität ist. Ferner läßt sich eine Drehzahlveränderung nur relativ langsam durchführen, so daß nicht auf alle Schwankungen in der Meßgröße reagiert werden kann. Desweiteren kann der Druck oder die Windgeschwindigkeit nur punktuell gemessen werden und ist somit nicht immer repräsentativ für die gesamte Reinigungseinrichtung.

Es ist daher Aufgabe der Erfindung, einen Mähdrescher zu schaffen, dessen optimale Einstellung der Reinigungseinrichtung aus einer für die Belastung der Reinigungseinrichtung repräsentativen Größe ableitbar ist.

Diese Aufgabe wird durch die kennzeichnenden Merkmale des Patentanspruches 1 gelöst. Weitere Ausgestaltungen der Erfindung werden in den Unteransprüchen genannt.

Erfindungsgemäß ist ein Sensor vorgesehen, dessen Meßsignal direkt oder indirekt ein Maß für die Belastung des Mähdreschers, insbesondere der Reinigungseinrichtung ist, wobei über ein an sich bekanntes Stellorgan in Abhängigkeit von diesem Signal die Einstellung der Reinigungseinrichtung erfolgt. Damit besteht erstmalig die Möglichkeit, die Reinigungseinrichtung auch in Abhängigkeit des Emtegutdurchsatzes optimal einstellen zu können.

In einer ersten Ausfiihrungsform wird die Einstellung der Reinigungseinrichtung durch eine Änderung der Sieböffnungsweite realisiert. Dadurch lassen sich die Reinigungsqualität sowie die Reinigungsverluste in weiten Bereichen bis hin zur optimalen Reinigung beeinflussen Dabei ist es vorzugsweise vorgesehen, sowohl das Obersieb als auch das Untersieb in erfinderischer Weise einzustellen, wobei es auch dann als Grenzfall der Erfindung selbstverständlich möglich ist, daß nur die Siebweite eines Siebes in Abhängigkeit von dem Sensorsignal verstellt wird. Ferner ist es in einer vorteilhaften Ausgestaltung der Erfindung vorgesehen, das mindestens ein Sieb, das wiederum aus mindestens zwei Teilsieben besteht, hinsichtlich seiner Teilsiebe separat einstellbar ist.

In einer weiteren Ausgestaltung ist es vorgesehen, die Gebläsedrehzahl in Abhängigkeit eines Meßsignals, welches ein direktes oder indirektes Maß für die Belastung des Mähdreschers ist, zu variieren.
Desweiteren kann einen optimale Einstellung der Reinigungseinrichtung durch eine Kombination von Siebeinstellung und Gebläsedrehzahl erfolgen.

Als Sensor sei beispielsweise ein Strohmengenmesser im Einzugskanal eines Mähdreschers genannt. Dieser ermittelt die Stohmenge anhand der Auslenkung einer Einzugskette oder Einzugstrommel. Als weiterer Sensor sei eine Fahrgeschwindigkeitsmeßvorrichtung des Mähdreschers erwähnt. Denn mit steigender Fahrgeschwindigkeit steigt auch bei gleichmäßigem Erntegutbestand die vom Mähdrescher aufgenommene Erntegutmenge an
Desweiteren werden heute Mähdrescher mit einer Erntegutmengenerfassung ausgerüstet. Auch aus dieser Meßgröße kann eine Einstellung für die Reinigungseinrichtung abgeleitet werden.

Die Einstellung der Reinigungsvorrichtung in Abhängigkeit des Sensorsignals erfolgt über eine Auswerteeinheit durch Berechnung des Steuersignals für das Stellorgan gemäß einer dort programmierten Funktion.

Alternativ dazu ist es vorgesehen, daß die Auswerteeinheit einen Speicher umfaßt, in dem vorherbestimmte Abhängigkeiten zwischen den gewünschten Einstellwerten und dem Sensorsignal in Form einer Tabelle oder einer Kennlinie bzw. eines Kennlinienfeldes gespeichert sind, wobei anhand der Tabelle oder der Kennline jeweils das Steuersignal ermittelt wird.

In einer weiteren Ausgestaltung der Erfindung ist es so vorgesehen, daß die Einstellung der Reinigungseinrichtung 1 verzögert durchgeführt wird Zwischen dem Meßort des Sensors 4 und der Reinigungseinrichtung 1 besteht in der Regel ein Abstand. Dieses wird notwendig, damit die aus dem Sensorsignal abgeleitete Reinigungseinstellung auch dann eingestellt ist, wenn die Reinigungseinrichtung so wie ermittelt belastet wird. Dieser zeitliche Verzug wird anhand der maschinenspezifischen Strecke zwischen Meßort und Reinigungseinrichtung, der Durchlaufgeschwindigkeit des Erntegutes durch die Erntemaschine und der bekannten Stellzeit des Stellorgans errechnet.

Anhand der beigefügten Zeichnung soll die Erfindung nachfolgend näher erläutert werden. Es zeigt:
- Fig. 1.: eine Seitenansicht der Reinigungseinrichtung,
- Fig.2: unterschiedliche Siebeinstellungen für verschiedene Fahrgeschwindigkeiten.

Das von den Dresch- und Trenneinrichtungen (nicht dargestellt) kommende Emtegut-Spreu-Kurzstrohgemisch wird zunächst von dem Vorbereitungsboden 7 durch die stufenförmige Oberfläche und durch eine horizontale Schüttelbewegungen des Bodens zu der Siebvorrichtung 2 transportiert und dabei vorsortiert. Das schwerere Erntegut gelangt dabei nach unten, während die leichteren Spreu- und Kurzstrohteile sich nach oben hin abtrennen.

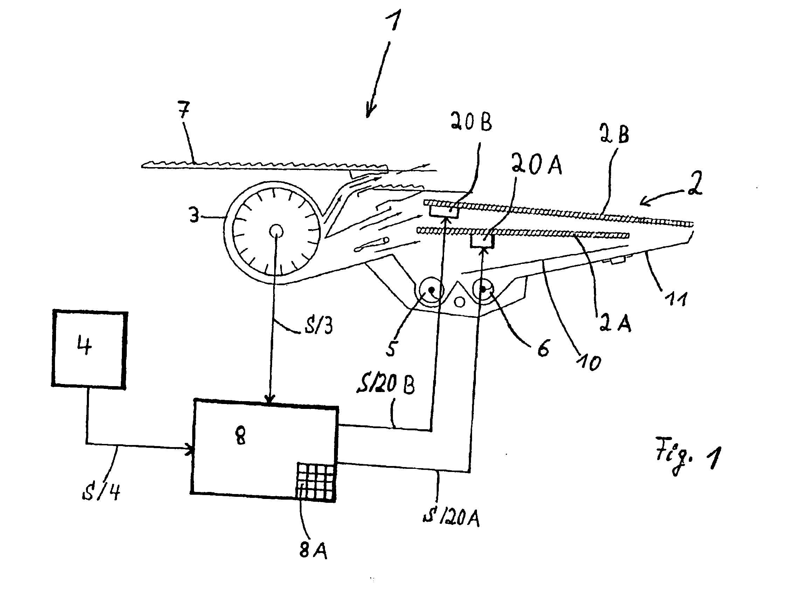

Die in Figur 1 gezeigte Reinigungseinrichtung 1 besteht aus einer Siebvorrichtung 2, die wiederum ein Obersieb 2B und ein Untersieb 2A aufweist, und einem Gebläse 3, das über entsprechende Windleitbleche das Unter- und Obersieb 2A, 2B von unten mit Wind beaufschlagen. Das Untersieb 2A hat die Aufgabe, die mit den Erntegut durch die Öffnungen des Obersiebes 2B gefallenen Verunreinigungen abzuscheiden. Das durch die Sieböffnungen gefallene Emtegut, gelangt dann auf ein Auffang- und Führungsboden 10, welches das Erntegut einer Kornförderschnecke 5 zuführt, von wo aus es mittels eines Elevators in den Korntank gefördert wird. Erntegutteile die größer sind als das zu erntende Erntegut (z.B. nicht ausgedroschene Ähren), können nicht durch die Siebe 2A, 2B fallen. Sie werden von dem Wind und einer Schüttelbewegung der Siebe über die Siebe hinwegbewegt und gelangen schließlich über einen Rücklaufboden 11 und der Überkehrschnecke 6 erneut in die Drescheinrichtung.

Die Siebe 2A, 2B sind vorzugsweise als Lamellensiebe ausgebildet. die aus gezahnten, hintereinander angeordneten und in ihrer Neigung verstellbaren Lamellen bestehen Zur Einstellung der Sieböffnungsweite weist jedes Sieb 2A, 2B ein an sich bekanntes Stellorgan 20A, 20B auf. Dies kann beispielsweise ein elektrohydraulisches Stellglied oder eine elektromechanisch angetriebene Spindel, die auf einen Hebel zur Verstellung der Lamellenneigung wirken sein.

Die Größe der Sieböffnungen des Obersiebes 2B ist dabei vorzugsweise in einem Bereich von 8 bis 24 mm einstellbar, während die Größe der Sieböffnungen des Untersiebes 2A vorzugsweise in einem Bereich von 2 bis 20 mm einstellbar ist.

Der Sensor 4, dessen Meßsignal S/4 direkt oder indirekt ein Maß für die Belastung des Mähdrescher mit Erntegut und somit auch ein Sensor für die Reinigungsbelastung ist, ist nur schematisch eingezeichnet. Wie schon erwähnt, kommen verschiedene Sensoren in Betracht. Hier sei noch ein weiterer Sensor, der die Feuchtigkeit des Strohs mißt, genannt. Dieser kommt deshalb in Frage, da die Brüchigkeit von trockenen Ernteguthalmen größer ist, und zu einem, die Reinigungseinrichtung 1 belastenden, erhöhten Kurzstrohanteil führt. Darüber hinaus kann auch ein Sensor, der den Abstand des Dreschkorbes von der Dreschtrommel mißt, erfindungsgemäß Verwendung finden, da diese Abstand ebenfalls einen Einfluß auf die Belastung der Reinigungseinrichtung 1 hat.

Der Fachmann ist bei der Anwendung der technischen Lehre der Erfindung nicht auf einen bestimmten Sensortyp beschränkt; entscheidend ist vielmehr, das ein Sensor 4 vorgesehen ist, dessen Meßsignal S/4 ein Maß die Belastung des Mähdreschers, insbesondere der Reinigungseinrichtung mit Erntegut ist und dieses Meßsignal für die Einstellung der Reinigungseinrichtung verwendet wird. Je nach verwendetem Sensortyp wird dabei der Zusammenhang zwischen der Erntegutbelastung und dem Meßsignal ermittelt sowie die daraus abzuleitende, gewünschte Reinigungseinstellung programmäßig abgebildet oder in Form einer Tabelle, Kennlinie oder eines Kennlinienfeldes erfaßt. Es ist auch durchaus denkbar, die Reinigungseinstellung aus mehreren ermittelbaren Einflußgrößen und deren Kombination abzuleiten.

Auf dem Mähdrescher ist beispielsweise eine Auswerteeinheit 8 vorgesehen, in der mittels einer programmierten Funktion φ in Abhängigkeit des Meßsignals S/4 ein Steuersignal S/20A, S/20B für die Stellorgane 20A. 20B zur Einstellung der gewünschten Sieböffnungsweite berechnet wird : φ (S/4) ⇒ S/20A bzw. S/20B.

Als Alternative zur Berechnung der Ansteuersignale für die Stellorgane ist es vorgesehen, daß die Auswerteeinheit 8 einen Speicher umfaßt, in dem vorherbestimmte Abhängigkeiten zwischen den gewünschten Einstellwerten, hier beispielsweise der Sieböffnungsweiten beziehungsweise den dafür erforderlichen Ansteuersignalen S/20A, S/20B, und dem Meßsignal S/4 in Form einer Tabelle, einer Kennlinie oder auch eines Kennlinienfeldes gespeichert sind.

Wie in Fig. 1 dargestellt, wird der Auswerteeinheit vorzugsweise auch noch die Gebläsedrehzahl S/3 als Signal zugeführt. Dabei ist es unter anderem vorgesehen, daß bei Verwendung eines Kennlinienfeldes die Auswahl einer Kennline in Abhängigkeit von der Gebläsedrehzahl erfolgt oder bei Verwendung einer programmierten Funktion bestimmte Parameter in Abhängigkeit von der Gebläsedrehzahl verändert werden.

Desweiteren sind vorzugsweise Mittel (z.B. Tastatur, Touchscreen o. dgl.) vorgesehen, mit denen die programmierte Funktion bzw. die gespeicherten Abhängigkeiten vom Fahrer des Mähdreschers veränderbar sind.

Die Signalleitungen von dem Sensor 4 zur Auswerteeinheit 8 sowie die Auswerteeinheit selbst und die Signalleitungen der Steuersignale zu den Stellorganen sind vorzugsweise integraler Bestandteil eines auf dem Mähdrescher installierten Netzwerkes.

Die Einstellung der Reinigungseinrichtung in Abhängigkeit des Sensorsignals S/4 kann vollautomatisch erfolgen. Über einen untergeordneten Regelkreis wird dann die Sieböffnung oder die Gebläsedrehzahl so lange verändert bis der vorgegebene Sollwert erreicht ist. Dieser Regler kann dann direkt in der Stelleinrichtung installiert oder auch Teil der Auswerteeinheit 8 sein. Die einzelnen Istwerte werden, durch an sich bekannte Mittel, dem jeweiligen Regler zugeführt und stehen auch für weitere Auswertungen oder als Meßwert für weitere Einstellungen zur Verfügung.

Es ist auch eine Moglichkeit zur manuellen Reinigungseinstellung vorgesehen, dabei wird dem Mähdrescherfahrer uber einen Kontrollmonitor erfindungsgemäße Einstellvorschläge gemacht. die er dann beispielsveise durch Knopfdruck zur Ausführung bringen kann.

Ferner ist eine Warneinrichtung, beispielsweise optische oder akustische, vorgesehen, die dem Fahrer mitteilt, wenn die Einstellwerte z.B. die Sieböffnungsweite und/oder die Änderung der Sieböffnung und/oder die Gebläsedrehzahl einen vorbestimmtbaren Grenzwert überschritten haben.

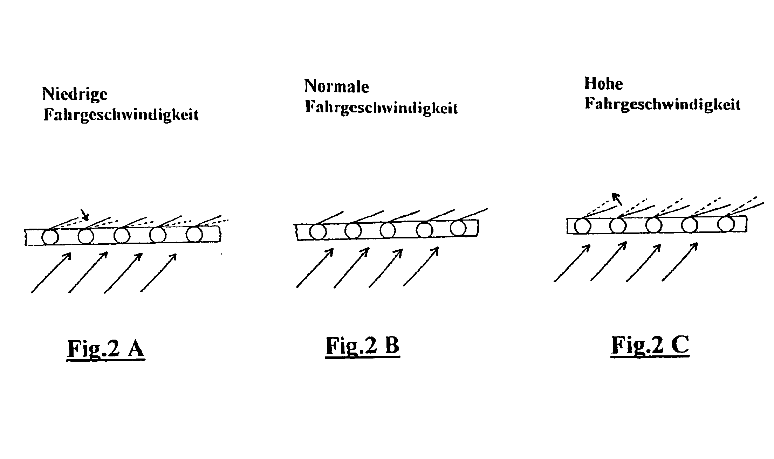

In Figur 2 ist gezeigt, wie die Siebweiten eines Siebes (z.B. des Obersiebes) in Abhängigkeit des Fahrgeschwindigkeitsignals eingestellt werden. Bei einem Feld mit einem gleichmäßigen Erntegutbestand bedeutet eine mittlere Fahrgeschwindigkeit auch einen mittleren Erntegutdurchsatz. Mit einem Anstieg der Fahrgeschwindigkeit steigt auch der Durchsatz, was erfindungsgemäß automatisch zu einer Vergrößerung der Sieböffnungsweite führt, wodurch dann wieder eine optimale Reinigung gewährleistet ist. Bei einer Verlangsamung der Fahrt, beispielsweise bei einem Vorgewende, wird dementsprechend die Sieböffnungsweite verringert. Hierdurch wird dann verhindert, daß bei abnehmender Reinigungsbelastung eine schlechtere Reinigungsqualität entsteht.

Es wird ferner in einer weiteren Ausgestaltung der Erfindung vorgesehen, den Einstellbereich der Reinigungseinrichtung 1 anhand von Grenzwerten vorzugeben. Damit wird zum Beispiel bei einem Leerlauf des Mähdreschers im Ernteeinsatz verhindert, daß die Reinigungseinrichtung sich so lange verstellt bis sie an die Endanschläge der Stellorgane gelangt.

## Patentansprüche

1. Vorrichtung an einem Mähdrescher mit einer Reinigungseinrichtung (1), die eine Siebvorrichtung (2) mit mindestens einem Sieb (2A, 2B), durch welche das in den Dresch- und Trenneinrichtungen abgeschiedene Erntegut gereinigt wird, und mindestens ein einstellbares Gebläse (3) zur Beaufschlagung der Siebvorrichtung (2) mit Wind umfasst, wobei die Öffnungsweiten der Siebvorrichtung (2) über mindestens ein Stellorgan (20A, 20B) und/ das Gebläse maschinell einstellbar sind, wobei der Mähdrescher mindestens zwei Sensoren (4) enthält, deren Messsignale (S/4) direkt oder indirekt ein Maß für die Belastung des Mähdreschers mit Erntegut sind,
**dadurch gekennzeichnet, dass**
die zumindest zwei Sensoren (4) außerhalb des Wirkbereichs, der Reinigungseinrichtung (1) dem Mähdrescher zugeordnet sind und die Einstellung der Sieböffnungsweite automatisch in Abhängigkeit zumindest vom Messsignal (S/4) der zumindest zwei Sensoren (4) zur Erfassung der Erntegutmenge und/öder der Fahrgeschwindigkeit des Mähdreschers erfolgt
und wobei eine Auswerteinheit (8) vorgesehen ist, die die Reinigungsaustellung aus einer Kombination von mehreren Messsignalen (S/4) ermittelt, die von verschiedenen der zumindest zwei Sensoren (4) generiert werden und wobei
bei der Einstellung der Sieböffnungsweite und/oder der Gebläsedrehzahl das Messsignal (S/4) eines Sensors (4) zur Erfassung der Strohfeuchte berücksichtigt wird.

2. Vorrichtung nach Anspruch 1,
**dadurch gekennzeichnet,**
**dass** neben der Einstellung der Sieböffnungsweite auch die Gebläsedrehzahl automatisch in Abhängigkeit zumindest vom Messsignal (S/4) der mindestens zwei Sensoren (4) zur Erfassung der Emtegutmenge und/oder der Fahrgeschwindigkeit des Mähdreschers erfolgt.

3. Vorrichtung nach mindestens einem der Ansprüche 1 oder 2,
**dadurch gekennzeichnet,daß**
bei der Einstellung der Sieböffungsweite und/oder der Gebläsedrehzahl das Meßsignal (S/4) eines Sensors (4) zur Erfassung der Strohmenge im Einzugskanal des Mähdreschers berücksichtigt wird.

4. Vorrichtung nach mindestens einem der Ansprüche 1 oder 3,
**dadurch gekennzeichnet,daß**
bei der Einstellung der Sieböffnungsweite die Gebläsedrehzahl berücksichtigt wird.

5. Vorrichtung nach mindestens einem der Ansprüche 1 bis 4,
**dadurch gekennzeichnet,daß**
eine Auswerteeinheit (8) vorgesehen ist, in der mittels einer programmierten Funktion in Abhängigkeit zumindest eines Meßsignals (S/4) ein Steuersignal zur gewünschten Reinigunaseinstellung berechnet wird.

6. Vorrichtung an einem Mähdrescher nach mindestens einem der Ansprüche 1 bis 5,
**dadurch gekennzeichnet, daß**
die Auswerteeinheit einen Speicher (8A) umfaßt, in dem vorherbestimmte Abhängigkeiten zwischen den gewünschten Sieböffnungsweiten und/oder der Gebläsedrehzahl und mindestens einem Meßsignal (S/4) in Form einer Tabelle oder einer Kennlinie beziehungsweise eines Kennlinienfeldes gespeichert sind. wobei jeweils anhand der Tabelle beziehungsweise der Kennlinie das Steuersignal ermittelt wird.

7. Vorrichtung an einem Mähdrescher nach mindestens einem der Ansprüche 1 bis 6,
**dadurch gekennzeichnet,daß**
eine neue Einstellung der Reinigungseinrichtung (1) von der Auswerteeinheit (8) derart eingestellt wird, daß die geänderte Einstellung dann vorliegt, wenn das Erntegut die Strecke zwischen dem Sensor (4) und der Reinigungseinrichtung (1) überwunden hat.

8. Vorrichtung an einem Mähdrescher nach mindestens einem der Ansprüche 1 bis 7,
**dadurch gekennzeichnet,daß**
Mittel vorgesehen sind, mit denen die programmierte Funktion bzw. die gespeicherten Abhängigkeiten änderbar sind.

9. Vorrichtung nach mindestens einem der vorstehenden Ansprüche 1 bis 8,
**dadurch gekennzeichnet,daß**
die Siebvorrichtung (2) ein Obersieb (2B) und ein Untersieb (2A) aufweist, deren Sieböffnungsweiten über je ein Stellorgan (20A, 20B) einstellbar sind, wobei die Sieböffnungsweite des Obersiebes (2B) und die Sieböffnungsweite des Untersiebes (2A) in Abhängigkeit des Meßsignals (S/4) unterschiedlich einstellbar sind.

10. Vorrichtung nach mindestens einem der vorstehenden Ansprüche 1 bis 9,
**dadurch gekennzeichnet,daß**
mindestens eines der Siebe (2A, 2B) aus mindestens zwei Teilsieben besteht, deren Sieböffnungsweiten über je ein Stellorgan einstellbar sind, wobei die Sieböffnungsweiten der Teilsiebe in Abhängigkeit des Meßsignals (S/4) unterschiedlich einstellbar sind.

11. Vorrichtung nach mindestens einem der vorstehenden Ansprüche 1 bis 10,
**dadurch gekennzeichnet,daß**
die möglichen Eiztstellbereiche durch vorgebbare Grenzwerte eingeschränkt werden können.

12. Vorrichtung nach mindestens einem der vorstehenden Ansprüche 1 bis 11,
**dadurch gekennzeichnet,daß**
bei einer automatisierten Überschreitung eines vorgegebenen Grenzwertes der Reinigungseinstellung ein Warnsignal erzeugt wird.

13. Verfahren nach mindestens einem der vorstehenden Ansprüche 1 bis 12,
**dadurch gekennzeichnet,daß**
die Einstellung der Sieböffnungsweite in Abhängigkeit der Fahrgeschwindigkeit derart erfolgt, daß bei einer Verlangsamung der Fahrt die Sieböffnung verringert und bei einer Erhöhung der Fahrtgeschwindigkeit die Sieböffnungsweite vergrößert wird.

## Claims

1. An apparatus on a combine harvester comprising a cleaning device (1) which includes a sifting device (2) with at least one sifter (2A, 2B), by which sifting device the crop material which is separated off in the threshing and separating devices is cleaned, and at least one adjustable blower (3) for subjecting the sifting device (2) to the effect of wind, wherein the opening widths of the sifting device (2) by way of at least one adjusting member (20A, 20B) and the blower are adjustable by machine, wherein the combine harvester includes at least two sensors (4) whose measurement signals (S/4) are directly or indirectly a measurement in respect of the loading of the combine harvester with crop material, **characterised in that** the at least two sensors (4) are associated with the combine harvester outside the operative region of the cleaning device (1) and adjustment of the sifting opening width is effected automatically in dependence at least on the measurement signal (S/4) of the at least two sensors (4) for detecting the amount of crop material and/or the speed of travel of the combine harvester, and wherein an evaluation unit (8) is provided which calculates the cleaning adjustment from a combination of a plurality of measurement signals (S/4) which are generated by various of the at least two sensors (4), and wherein upon adjustment of the sifting opening width and/or the speed of rotation of the blower the measurement signal (S/4) of a sensor (4) is taken into account for detecting the straw moisture content.

2. An apparatus according to claim 1 **characterised in that** besides adjustment of the sifting opening width the speed of rotation of the blower is also adjusted automatically in dependence at least on the measurement signal (S/4) of the at least two sensors (4) for detecting the amount of crop material and/or the speed of travel of the combine harvester.

3. An apparatus according to at least one of claims 1 and 2 **characterised in that** upon adjustment of the sifting opening width and/or the speed of rotation of the blower the measurement signal (S/4) of a sensor (4) is taken into account for detecting the amount of straw in the draw-in passage of the combine harvester.

4. Apparatus according to at least one of claims 1 or 3, **characterised in that** the speed of rotation of the blower is taken into consideration when adjusting the sifting opening width.

5. Apparatus according to at least one of claims 1 to 4 **characterised in that** there is provided an evaluation unit (8) in which a control signal for the desired cleaning adjustment is calculated by means of a programmed function in dependence on at least one measurement signal (S/4).

6. Apparatus on a combine harvester according to at least one of claims 1 to 5 **characterised in that** the evaluation unit includes a storage means (8A) in which predetermined dependencies between the desired sifting opening widths and/or the speed of rotation of the blower and at least one measurement signal (S/4) are stored in the form of a table or a characteristic curve or a characteristic curve array, wherein in each case the control signal is ascertained on the basis of the table or the characteristic curve respectively.

7. Apparatus on a combine harvester according to at least one of claims 1 to 6 **characterised in that** a new adjustment of the cleaning device (1) is set by the evaluation unit (8) in such a way that the modified setting is present when the crop material has covered the distance between the sensor (4) and the cleaning device (1).

8. Apparatus on a combine harvester according to at least one of claims 1 to 7 **characterised in that** there are provided means with which the programmed function or the stored dependencies are variable.

9. Apparatus according to at least one of preceding claims 1 to 8 **characterised in that** the sifting device (2) has an upper sifter (2B) and a lower sifter (2A) whose sifting opening widths are adjustable by way of a respective adjusting member (20A, 20B), wherein the sifting opening width of the upper sifter (2B) and the sifting opening width of the lower sifter (2A) are adjustable differently in dependence on the measurement signal (S/4).

10. Apparatus according to at least one of preceding claims 1 to 9 **characterised in that** at least one of the sifters (2A, 2B) comprises at least two sifter portions whose sifting opening widths are adjustable by way of a respective adjusting member, wherein the sifting opening widths of the sifter portions are adjustable differently in dependence on the measurement signal (S/4).

11. Apparatus according to at least one of preceding claims 1 to 10 **characterised in that** the possible adjustment ranges can be limited by predeterminable limit values.

12. Apparatus according to at least one of preceding claims 1 to 11 **characterised in that** a warning signal is produced when a predetermined limit value of the cleaning adjustment is automatedly exceeded.

13. A method according to at least one of preceding claims 1 to 12 **characterised in that** the adjustment of the sifting opening width is effected in dependence on the speed of travel in such a way that upon a reduction in the speed of travel the sifting opening is reduced and upon an increase in the speed of travel the sifting opening width is increased.

## Revendications

1. Dispositif sur une moissonneuse-batteuse équipée d'un mécanisme de nettoyage (1) qui comprend un dispositif de tamis (2) avec au moins un tamis (2A, 2B) par lequel le produit récolté délivré par les mécanismes de battage et de séparation est nettoyé et au moins une soufflante (3) réglable pour alimenter le dispositif de tamis (2) avec un courant d'air, les sections d'ouverture du dispositif de tamis (2) pouvant être réglées par l'intermédiaire d'au moins un organe de réglage (20A, 20B) et la soufflante pouvant être réglée mécaniquement, la moissonneuse-batteuse comprenant au moins deux capteurs (4), dont les signaux de mesure (S/4) représentent une grandeur indicatrice directe ou indirecte de la charge de la moissonneuse-batteuse, **caractérisé en ce que** les capteurs (4) au nombre d'au moins deux, en dehors de la zone d'action du mécanisme de nettoyage (1), sont associés à la moissonneuse-batteuse et **en ce que** le réglage de la section d'ouverture du tamis a lieu de manière automatique en fonction d'au moins les signaux de mesure (S/4) des deux capteurs (4), au nombre d'au moins deux, de mesure de la quantité de produit récolté et/ou de la vitesse de déplacement de la moissonneuse-batteuse, une unité de traitement (8) étant prévue pour déterminer le réglage de nettoyage sur la base d'une combinaison de plusieurs signaux de mesure (S/4) qui sont générés par des capteurs différents parmi les capteurs (4), au nombre d'au moins deux, le signal de mesure (S/4) d'un capteur (4) de mesure de l'humidité de la paille étant pris en compte lors du réglage de la section d'ouverture du dispositif de tamis et/ou de la vitesse de rotation de la soufflante.

2. Dispositif selon la revendication 1, **caractérisé en ce qu'**en plus de la section d'ouverture du tamis, la vitesse de rotation de la soufflante est également réglée de manière automatique en fonction d'au moins le signal de mesure (S/4) des capteurs (4), au nombre d'au moins deux, de mesure de la quantité de produit récolté et/ou de la vitesse de déplacement de la moissonneuse-batteuse.

3. Dispositif selon au moins une des revendications 1 ou 2,
**caractérisé en ce que** pour le réglage de la section d'ouverture du tamis et/ou de la vitesse de rotation de la soufflante on utilise le signal de mesure (S/4) d'un capteur (4) pour la mesure du débit de paille dans le canal d'alimentation de la moissonneuse-batteuse.

4. Dispositif selon au moins une des revendications 1 ou 3, **caractérisé en ce** pour le réglage de la section d'ouverture du tamis, il est tenu compte de la vitesse de rotation de la soufflante.

5. Dispositif selon au moins une des revendications 1 à 4, **caractérisé en ce qu'**il est prévu une unité de traitement (8) dans laquelle un signal de commande pour le réglage souhaité du mécanisme de nettoyage est calculé à l'aide d'une fonction programmée en fonction d'au moins un signal de mesure (S/4).

6. Dispositif sur une moissonneuse-batteuse selon au moins une des revendications 1 à 5, **caractérisé en ce que** l'unité de traitement comprend une mémoire (8a), dans laquelle des relations prédéterminées entre les sections d'ouverture souhaitées et/ou la vitesse de rotation de la soufflante et au moins un signal de mesure (S/4) sont mémorisées sous la forme d'un tableau ou d'une courbe caractéristique voire d'un champ de courbes, le signal de commande étant déterminé chaque fois à l'aide du tableau ou de la courbe caractéristique.

7. Dispositif sur une moissonneuse-batteuse selon au moins une des revendications 1 à 6, **caractérisé en ce qu'**un nouveau réglage du mécanisme de nettoyage est commandé par l'unité de traitement (8) de manière telle, que le réglage modifié soit appliqué lorsque le produit récolté a franchi la distance entre le capteur (4) et le mécanisme de nettoyage (1).

8. Dispositif sur une moissonneuse-batteuse selon au moins une des revendications 1 à 7, **caractérisé en ce qu'**il est prévu des moyens à l'aide desquels la fonction programmée ou les relations prédéterminées peuvent être modifiées.

9. Dispositif selon au moins une des revendications 1 à 8 précédentes, **caractérisé en ce que** le dispositif de tamis (2) comprend un tamis supérieur (2B) et un tamis inférieur (2A), dont les sections d'ouverture peuvent être réglées à l'aide chacune d'un organe de réglage (20A, 20B), la section d'ouverture du tamis supérieur (2B) et la section d'ouverture du tamis inférieur (2A) pouvant être réglées différemment en fonction du signal de mesure (S/4).

10. Dispositif selon au moins une des revendications 1 à 9 précédentes, **caractérisé en ce qu'**au moins un des tamis (2A, 2B) est formé d'au moins deux tamis élémentaires, dont les sections d'ouverture peuvent être réglées chacune par l'intermédiaire d'un organe de réglage, les sections d'ouverture des tamis élémentaires pouvant être réglées différemment en fonction du signal de mesure (S/4).

11. Dispositif selon au moins une des revendications 1 à 10 précédentes, **caractérisé en ce que** les domaines de réglage possibles sont délimités par des valeurs limites prédéterminables.

12. Dispositif selon au moins une des revendications 1 à 11 précédentes, **caractérisé en ce qu'**en cas de dépassement en mode automatique d'une valeur limite prédéterminée du mécanisme de nettoyage, un signal d'avertissement est délivré.

13. Dispositif selon au moins une des revendications 1 à 12 précédentes, **caractérisé en ce que** le réglage des de la section d'ouverture des tamis en fonction de la vitesse de déplacement a lieu de manière telle qu'en cas de ralentissement, l'ouverture des tamis est diminuée et en cas d'élévation de la vitesse de déplacement l'ouverture des tamis est augmentée.
